# FASCICULE DE BREVET EUROPEEN

(11) **EP 2 870 684 B1**
(45) Date de publication et mention de la délivrance du brevet: **04.05.2016**
(21) Numéro de dépôt: 13744596.1
(22) Date de dépôt: 19.06.2013
(51) Int. Cl.: H02K 21/04

(54) **MACHINE ELECTRIQUE TOURNANTE A COMPENSATION DE REACTION MAGNETIQUE D'INDUIT**
ELEKTRISCHE DREHMASCHINE MIT KOMPENSATION VON MAGNETISCHER ANKERRÜCKKOPPLUNG
ROTATING ELECTRIC MACHINE WITH COMPENSATION OF ARMATURE MAGNETIC FEEDBACK

(30) Priorité: 04.07.2012 FR 1256418
(43) Date de publication de la demande: 13.05.2015
(73) Titulaire: Valeo Equipements Electriques Moteur, 94046 Créteil Cedex (FR)
(72) Inventeur: DAANOUNE, Abdeljalil, F-94000 Creteil (FR); FOGGIA, Albert, F-38000 Grenoble (FR)
(86) Numéro de dépôt international: PCT/FR2013/051430
(87) Numéro de publication internationale: WO 2014/006294

(56) Documents cités:
- EP-A1- 1 209 798
- EP-A1- 2 157 679
- WO-A1-2007/026717
- WO-A1-2010/125262
- WO-A1-2012/013885
- WO-A1-2012/042135
- DE-A1-102011 008 076
- US-A1- 2007 090 713
- LI LI ET AL: "Some armature reaction compensation methods numerical design of experiments and optimization for a hybrid excitation machine", ELECTRIC MACHINES AND DRIVES CONFERENCE, 2009. IEMDC '09. IEEE INTERNATIONAL, IEEE, PISCATAWAY, NJ, USA, 3 mai 2009 (2009-05-03), pages 832-838, XP031475868, ISBN: 978-1-4244-4251-5

## Description

### DOMAINE TECHNIQUE DE L'INVENTION.

La présente invention concerne une machine électrique tournante à compensation de réaction magnétique d'induit, notamment une machine électrique tournante hybride pour des applications comme moteur électrique de traction dans des véhicules automobiles électriques et hybrides.

### ARRIERE PLAN TECHNOLOGIQUE DE L'INVENTION.

La compensation de la réaction magnétique d'induit (RMI) dans les machines à courant continu et les machines synchrones a fait l'objet de plusieurs recherches et publications :
- il est connu dans les machines synchrones à double excitation (MSDE) d'implanter des aimants sur les faces polaires du rotor, en les orientant de façon à contrer le flux crée par la RMI. Une autre solution consiste à réaliser un entrefer progressif.
- dans les MSDE également, il est connu de réaliser des fentes au niveau des pôles pour empêcher le flux de la RMI (flux dans l'axe q) de circuler en saturant son passage.
- dans les machines à griffes, il est connu de placer des aimants dans les griffes pour créer un flux dans l'axe q.

Les machines synchrones sont aujourd'hui d'une utilisation très courante dans tous les domaines de l'industrie. A cause de leur simplicité de commande, elles sont aussi très recherchées d'une manière générale dans toutes les applications embarquées.

Ces machines électriques sont réalisables dans une large gamme de puissance et de vitesse et trouvent des applications aussi bien dans les véhicules de type « tout électrique » que dans les véhicules à bas CO₂ de types dits « mild-hybrid » et « full-hybrid » (en terminologie anglaise).

Les applications « mild-hybrid » concernent généralement des machines électriques de l'ordre de 8 à 10 KW, par exemple, un moteur électrique monté en face avant d'un moteur thermique et couplé à celui-ci par une courroie de transmission. Il est possible avec un tel moteur électrique de réduire la cylindrée de la motorisation thermique (« engine downsizing » en terminologie anglaise) en prévoyant une assistance électrique en couple qui fournit un appoint de puissance, notamment lors des reprises. De plus, une traction à faible vitesse, par exemple en environnement urbain, peut également être assurée par ce même moteur électrique.

Les applications de type « full-hybrid» concernent généralement des moteurs de 30 à 50 KW pour des architectures de type série et/ou parallèle avec un niveau d'intégration plus abouti du ou des moteurs électriques dans la chaîne de traction du véhicule.

Les machines synchrones à rotor bobiné (MSRB) classiques à pôles saillants ont été supplantées par des machines à rotor dit "à concentration de flux" qui ont atteint des performances remarquables avec des aimants aux terres rares.

Cependant, des problèmes de défluxage et/ou des problèmes de fortes réactions d'induit peuvent subsister, auxquels il est parfois difficile de trouver des solutions.

Concernant les problèmes de défluxage, il est connu que les machines à double excitation sont plus facilement défluxables et offrent la possibilité de combiner dans leur rotor une densité d'énergie élevée apportée par les aimants permanents et une capacité à contrôler le flux magnétique dans l'entrefer apportée par le bobinage d'excitation.

Une machine électrique tournante synchrone avec un rotor à double excitation est par exemple décrite dans la demande de brevet WO2012/013885.

La structure du rotor a été optimisée afin d'accroître les performances et l'intérêt de ces machines pour l'industrie automobile, mais les problèmes de RMI ne semblent pas avoir été pris en compte.

Un moyen supplémentaire d'améliorer le rendement de la machine serait donc de compenser la réaction magnétique de l'induit.

Dans le brevet américain US4249099, il est décrit une génératrice avec une réaction d'induit réduite comportant un circuit magnétique constitué d'un sandwich de tôles magnétiques et a magnétiques.

Il est clair que des structures de rotor ou de stator aussi complexes que celles décrites dans ce brevet ne peuvent pas trouver d'applications dans les machines électriques tournantes utilisées dans le domaine très concurrentiel de l'automobile.

Le document « Some armature reaction compensation methods numerical design of experiments and optimization for a hybrid excitation machine » décrit une machine synchrone qui combine une excitation par aimant permanent et par enroulement ainsi que des méthodes pour optimiser les performances de la machine. Ce document décrit trois structures envisageables pour améliorer les performances de la machine : une avec un aimant de compensation, une avec un entrefer progressif et une avec une rainure dans les pôles magnétiques.

Le document DE 10 2011 008076 décrit un composant d'une machine électrique comprenant une base de fer ayant plusieurs pôles magnétiques. Chaque pôle comporte un noyau d'enroulement bobiné par un enroulement de pole pour générer un champ magnétique. Un aimant permanent est prévu entre deux pôles dans la direction circonférentielle de telle sorte que le noyau d'enroulement est court-circuité par l'aimant permanent par un flux magnétique généré dans la base lorsque les enroulements de pole sont excités.

Le document EP 2 157 679 décrit un rotor de machine électrique tournante synchrone, la machine étant notamment du type polyphasé, le rotor comportant deux roues polaires et au moins un dispositif de compensation de l'effet de la réaction magnétique d'induit lors du fonctionnement de la machine électrique tournante, ce dispositif étant porté au moins partiellement par l'une au moins des roues polaires.

Il existe donc un besoin pour une solution aux problèmes de RMI qui reste simple et modifie peu la structure des machines existantes.

### DESCRIPTION GENERALE DE L'INVENTION.

La présente invention a précisément pour objet une machine électrique tournante avec compensation de la réaction magnétique d'induit, la machine électrique tournante étant du type de celles comprenant:
- un stator muni de bobinages statoriques;
- un entrefer;
- un rotor comprenant une pluralité de pôles Nord et pôles Sud alternés.

Ces pôles sont formés à partir d'une pluralité de bobines d'excitation logées dans une pluralité de premiers évidements, qui sont répartis régulièrement autour d'un arbre du rotor.

Ces premiers évidements sont agencés radialement dans une partie intermédiaire de ce rotor entre une partie centrale et une partie circonférentielle du rotor. Ils se prolongent axialement dans une masse magnétique du rotor de manière à définir un nombre prédéterminé Np de sections polaires circonférentielles.

Chacune des bobines d'excitation est insérée autour d'un noyau formant cloison entre deux des premiers évidements consécutifs, ce noyau étant sensiblement aligné sur un axe radial central de la section polaire correspondante.

La machine électrique tournante avec compensation de la réaction magnétique d'induit selon l'invention est remarquable en ce que le rotor comprend en outre une pluralité de premiers aimants permanents présentant une direction d'aimantation sensiblement tangentielle qui sont agencés dans des deuxièmes évidements s'étendant sensiblement dans des plans de symétrie radiaux des sections polaires de manière à compenser la RMI, et une pluralité de seconds aimants permanents agencés dans des troisièmes évidements répartis régulièrement autour de l'arbre du rotor dans la partie circonférentielle, entre les sections polaires, et se prolongeant axialement dans la masse magnétique du rotor de manière à contribuer à la formation des pôles Nord et pôles Sud.

Selon l'invention, les premiers aimants permanents présentent chacun un sens d'aimantation prédéterminé de manière à compenser la réaction magnétique d'induit en fonction d'un sens de rotation prédéterminé d'un mode de fonctionnement en moteur ou en génératrice préférentiel.

De préférence, les premiers aimants permanents présentent chacun une section droite sensiblement rectangulaire, une hauteur dans une direction radiale et une épaisseur dans une direction tangentielle, un côté central à une première distance de l'arbre du rotor, un côté périphérique à une seconde distance de l'entrefer, un décalage d'un plan médian par rapport au plan de symétrie radial de la section polaire correspondante et la machine électrique tournante avec compensation de la réaction magnétique d'induit selon l'invention est aussi remarquable en ce que ces hauteur et épaisseur, ces première et seconde distances, et ce décalage sont prédéterminés de manière à compenser la réaction magnétique d'induit.

Ces quelques spécifications essentielles auront rendu évidents pour l'homme de métier les avantages apportés par la machine électrique tournante selon l'invention par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS.

La **Figure 1** montre une vue en coupe radiale partielle d'une machine électrique tournante à compensation de réaction magnétique d'induit selon l'invention.
Les **Figures 2a et 2b** montrent respectivement l'induction dans l'entrefer et le spectre de l'induction dans l'entrefer d'une machine électrique tournante sans compensation de RMI (trait plein et barres blanches) et d'une machine électrique tournante avec compensation de RMI selon l'invention (trait en pointillés et barres noires).

### DESCRIPTION DES MODES DE REALISATION PREFERES DE L'INVENTION.

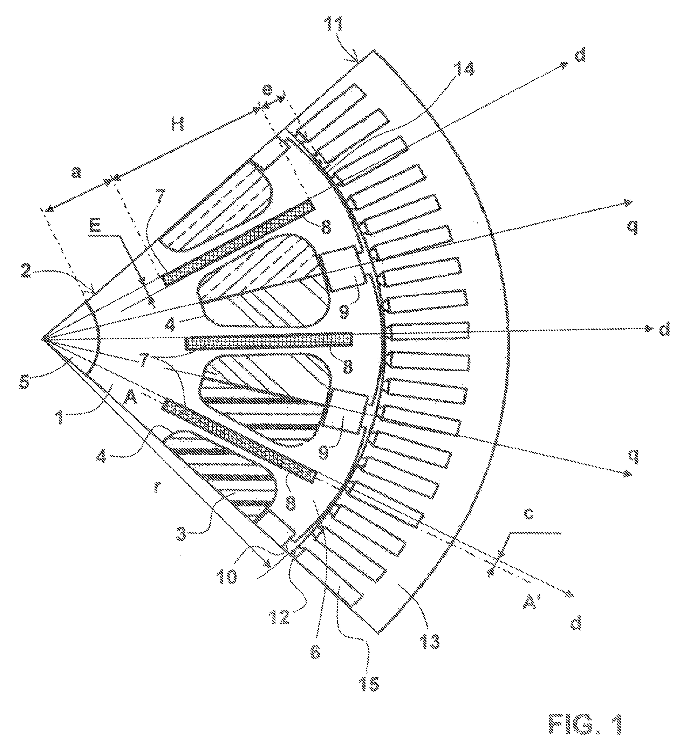

La coupe radiale partielle d'une machine électrique tournante à compensation de réaction magnétique d'induit selon l'invention, représentée sur la **Figure 1**, montre l'agencement dans la masse magnétique 1 du rotor 2 d'une pluralité de bobines d'excitation 3 logées dans une pluralité de premiers évidements 4, qui sont répartis régulièrement autour d'un arbre 5 du rotor 2, de manière à former une pluralité de pôles Nord et pôles Sud alternés (axe d), selon une structure de type MSRB classique à pôles saillants.

Chacune des bobines d'excitation 3 est insérée autour d'un noyau formant cloison entre deux des premiers évidements 4 consécutifs, ce noyau étant sensiblement aligné sur un axe radial central (axe d) d'une section polaire correspondante 6.

A partir de cette structure classique, l'entité inventive à déterminé, grâce à des simulations sur ordinateur et à des essais, que la RMI est compensée en créant un flux dans un axe q du rotor 2 au moyen de premiers aimants permanents 7 présentant une aimantation sensiblement tangentielle agencés dans des deuxièmes évidements 8 s'étendant sensiblement dans des plans de symétrie radiaux (axe d) des sections polaires 6.

Une même compensation de la RMI est obtenue dans une structure de type MSDE où le rotor 2 comprend en outre une pluralité de seconds aimants permanents 9 agencés dans des troisièmes évidements 10 répartis régulièrement dans une partie circonférentielle du rotor 2 entre les sections polaires 6 dans une configuration à concentration de flux.

Une réalisation concrète de cette machine est par exemple un moteur/génératrice de 10 à 25 KW pour des applications dans des véhicules automobiles du type dits «mild-hybrid».

Dans son mode de fonctionnement en moteur cette machine peut être conçue pour le démarrage du moteur thermique, l'assistance en couple du moteur thermique ainsi que pour la traction électrique à faible vitesse du véhicule.

La **Figure 1** correspond à une forme de réalisation particulière de cette machine, où le rotor 2 comporte douze premiers aimants permanents 7 compensant la RMI et douze seconds aimants permanents 9 contribuant à la création de flux dans l'axe d.

Le rotor 2 tourne à l'intérieur d'un stator 11 ayant soixante-douze encoches 12.

Le stator 11 et le rotor 2 sont réalisés de manière classique avec des paquets de tôles métalliques formant des masses magnétiques 1, 13 et laissent entre eux un entrefer 14.

Les encoches 12 du stator 11 sont prévues pour recevoir des bobinages statoriques 15 et forment entre elles une pluralité de dents statoriques. Selon les formes de réalisation, les encoches 12 seront prévues pour loger des bobinages concentrés, bobinés sur des grosses dents, ou bien des bobinages distribués.

En mode de fonctionnement en génératrice de la machine électrique tournante, les courants circulant dans les bobinages statoriques 15 créent un champ supplémentaire, tournant à la même vitesse que celui généré par le rotor 2 et se superposant à ce dernier. Ceci a pour effet de modifier le flux utile, donc la valeur de la f.é.m. induite, et constitue la réaction magnétique d'induit parasite.

En mode de fonctionnement en moteur, les bobinages statoriques 15 sont parcourus par un courant statorique et créent un champ magnétique tournant entraînant le rotor 2. La rotation du rotor 2 produit un autre champ tournant parasite qui a également pour effet de modifier le flux utile, et donc d'influer négativement sur le couple moteur fourni.

Les simulations et essais effectués par l'entité inventive dans le but de compenser la réaction magnétique d'induit au moyen des premiers aimants permanents 7 de section droite sensiblement rectangulaire, montrés sur la **Figure 1**, ont pris en compte les paramètres suivants de ces premiers aimants permanents 7:
- une hauteur H dans une direction radiale;
- une épaisseur E dans une direction tangentielle;
- une première distance a d'un côté central à l'arbre 5 du rotor 2;
- une seconde distance e d'un côté périphérique à l'entrefer 14;
- un décalage c d'un plan médian AA' par rapport au plan de symétrie radial de la section polaire 6 correspondante (axe d).

La position des premiers aimants permanents 7 par rapport à l'arbre 5 influe directement sur la circulation du flux d'excitation.

Pour des premiers aimants permanents 7 non enterrés (c'est-à-dire dans le cas où la seconde distance e est nulle) et agencés symétriquement par rapport aux sections polaires 6 (c'est-à-dire dans le cas où le décalage c est nul), l'entité inventive a constaté que:
- Premiers aimants permanents 7 en contact avec l'arbre 5 (c'est-à-dire dans le cas où la première distance a est nulle):
   Lorsque la machine est non excitée, la totalité du flux créé par ces premiers aimants permanents 7 passe dans l'entrefer 14 et produit une forte f.é.m dans les bobinages statoriques 15. Ceci peut être très nuisible selon le mode de fonctionnement de la machine (moteur/ génératrice). Dans cette configuration, on est obligé d'injecter un courant supplémentaire si on veut annuler cette fém (en mode génératrice, par exemple, quand la batterie est en charge).
- Premiers aimants permanents 7 séparés de l'arbre 5 (c'est-à-dire dans le cas où la première distance a est supérieure à zéro):
   Lorsqu'on sépare l'arbre 5 des premiers aimants permanents 7, on court-circuite ces derniers, la totalité du flux créé reste donc en circulation dans le rotor 2 et on réduit considérablement son effet sur le stator 11. La f.é.m parasite générée est plus faible.

Dans les modes de réalisation préférés de la machine électrique tournante avec compensation de réaction magnétique d'induit selon l'invention, les premiers aimants permanents 7 sont donc séparés de l'arbre 5 (la première distance a est supérieure à zéro) comme le montre bien la **Figure 1**.

L'entité inventive a considéré la mise en place des premiers aimants permanents 7 par rapport à la partie circonférentielle du rotor 2 de deux manières différentes: ils sont ou complètement enterrés dans le rotor et séparés de sa surface d'une seconde distance e, ou directement en contact avec l'entrefer 14.

Dans cette structure, les premiers aimants permanents 7 ont pour rôle principal la compensation de la réaction magnétique d'induit. Or cette dernière est concentrée essentiellement à la surface de la section polaire 6. Un choix judicieux est donc de placer les premiers aimants permanents 7 à la surface du rotor 2 pour compenser au maximum la RMI.

Une simulation informatique, montrant les équiflux dans les deux configurations, confirme le fait que mettre les premiers aimants permanents 7 en contact avec l'entrefer 14 permet d'affaiblir considérablement la RMI.

Dans les modes de réalisation préférés de la machine électrique tournante avec compensation de réaction magnétique d'induit selon l'invention, les premiers aimants permanents 7 sont donc en contact avec l'entrefer 15 (la seconde distance e est sensiblement égale à zéro).

Dans les simulations précédentes, les premiers aimants permanents 7 ont été placés symétriquement par rapport aux sections polaires 6 (décalage c nul). Or, on remarque que les inductions mesurées au voisinage des deux faces de ces premiers aimants permanents 7 ne sont pas homogènes, la masse magnétique 1 étant plus saturée au voisinage d'une face que de l'autre selon le sens d'aimantation des premiers aimants permanents 7 et celui des bobines d'excitation 3 du rotor 2. La simulation du passage des flux dans les sections polaires 6 montre que les flux créés par les premiers aimants permanents 7 ont tendance à renforcer ceux des bobines d'excitation 3 au voisinage d'une face et à les affaiblir au voisinage de l'autre, d'où une forte saturation au niveau de l'une d'elle.

L'entité inventive a constaté au cours des simulations et essais qu'un décalage des premiers aimants permanents 7 par rapport aux axes polaires (axe d) permet de mieux répartir les flux circulant dans les sections polaires 6 pour compenser la RMI, notamment pour un décalage c sensiblement égal à la moitié de leur épaisseur E.

Dans les modes de réalisation préférés de la machine électrique tournante avec compensation de réaction magnétique d'induit selon l'invention, les premiers aimants permanents 7 sont donc décalés du plan de symétrie radial des sections polaires 6 (décalage c est supérieure à zéro), comme le montre bien la **Figure 1****.**

La position optimale des premiers aimants permanents 7 dans les sections polaires 6 pour compenser la RMI ayant été déterminée, l'entité inventive a réalisé d'autres simulations et essais pour déterminer les dimensions optimales des premiers aimants permanents 7 dans un rotor 2 de diamètre 2r compris entre 90 et 110 mm.

Ces simulations ont été effectuées en s'appuyant sur un calcul par éléments finis en faisant varier la hauteur H et l'épaisseur E des premiers aimants permanents 7, pour un point de fonctionnement en mode moteur déterminé, de façon à minimiser le taux de distorsion harmonique (THD) de l'induction B dans l'entrefer 14.

Les dimensions optimales des premiers aimants permanents 7 qui conduisent à la meilleure compensation de la réaction magnétique d'induit en fonctionnement en mode moteur, selon ces simulations, sont indiquées dans la **Table I** suivante, en fonction du matériau constituant les premiers aimants permanents 7.

**Table I**

| **Matériau** | **Epaisseur E (mm)** | **Hauteur H (mm)** |
|---|---|---|
| Terres rares | 1,2 | 13 |
| Ferrite | 1,5 | 17 |

Autour de ces dimensions optimales, les simulations montrent qu'il existe des plages optimales de variation de l'épaisseur E et de la hauteur H dans lesquelles le THD est le plus faible comme résultat de la compensation de RMI:
- épaisseur E comprise entre 0,5 mm et 2,5 mm;
- hauteur H comprise entre 13 mm et 27 mm.

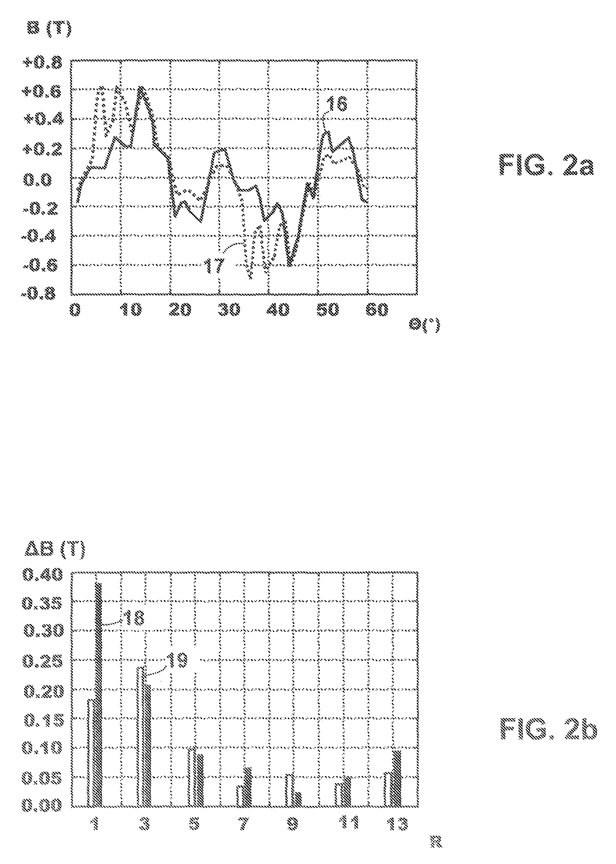

La **Figure 2a** montre bien la meilleure forme de l'induction B dans l'entrefer 14 quand le rotor 2 comprend des premiers aimants permanents 7 présentant les caractéristiques indiquées (trait en pointillés 17) par rapport à une machine sans compensation de RMI (trait plein 16).

La réduction du taux de distorsion harmonique obtenue grâce aux premiers aimants permanents 7 apparaît aussi clairement sur la **Figure 2b**, si l'on compare l'amplitude ΔB des harmoniques de différents rangs R pour une machine avec compensation de RMI (barres noires 18) selon l'invention, et pour une machine sans compensation de RMI (barres blanches 19).

Les avantages apportés par l'invention par rapport à une machine sans aimants sont montrés dans la **Table II** ci-dessous pour un exemple de réalisation particulier de l'invention (fonctionnement en moteur à 16.000 tr/mn).

**Table II**

| | **Machine sans aimant** | **Machine avec aimants** |
|---|---|---|
| **Couple (N.m)** | 5 | 5 |
| **Angle de couple (°)** | 80 | 80 |
| **Courant stator (A)** | 40 | 20 |
| **Courant d'excitation (A)** | 7 | 7 |
| **Pertes fer stator (W)** | 800 | 700 |
| **Pertes fer rotor (W)** | 30 | 20 |
| **Rendement (%)** | 82 | 90 |

Les simulations précédentes ont porté sur le fonctionnement en mode moteur de la machine. Les emplacements e, a, c dans les sections polaires 6 des premiers aimants permanents 7 et les dimensions E, H ont été déterminés pour atteindre les meilleures performances de la machine (Forme de l'induction B, pertes, rendement, ...etc) en compensant la RMI.

Or, dans les applications automobiles, les machines sont souvent destinées à fonctionner sous les deux modes génératrice/ moteur.

L'entité inventive a constaté, en poursuivant les simulations et des essais en mode génératrice, que l'optimisation effectuée en mode moteur conduisait à une dégradation des performances en mode génératrice par rapport à une structure de rotor 2 ne comportant pas les premiers aimants permanents 7.

En mode génératrice, la RMI n'est pas compensée; bien au contraire, la forme de l'induction B dans l'entrefer 14 est beaucoup plus riche en harmoniques

En revanche, lorsqu'on inverse le sens d'aimantation des premiers aimants permanents 7, la RMI est compensée avec succès, comme pour le mode moteur.

L'entité inventive a constaté que la compensation de la RMI pour les moteurs et les génératrices se fait donc avec deux sens d'aimantation différents.

Pratiquement, il n'est pas possible de changer le sens d'aimantation des premiers aimants permanents 7 en passant d'un mode à l'autre. Le sens de rotation de la machine étant unique dans la plupart des applications automobiles, on ne peut pas envisager un sens de rotation pour chaque mode de fonctionnement. Il faut donc privilégier un mode de fonctionnement au détriment de l'autre et trouver un compromis selon les applications.

S'agissant de préférence d'une application pour véhicules hybrides, le fonctionnement en mode moteur est très important: il assure le démarrage de la voiture et assiste le moteur thermique en cas de grandes accélérations.

Dans les modes réalisation préférés de la machine électrique tournante à compensation de réaction d'induit selon l'invention, les premiers aimants permanents 7 sont par conséquent orientés et optimisés pour avoir une meilleure compensation de la RMI en mode moteur.

Comme il va de soi, l'invention ne se limite pas aux seuls modes de réalisation préférentiels exposés ci-dessus.

Notamment, les caractéristiques du stator 11 et du rotor 2, et les points de fonctionnement spécifiés-conduisant à des optima particuliers des emplacements et dimensions des premiers aimants permanents 7 ne sont que des exemples correspondant à des réalisations particulières.

D'autres modes de réalisation correspondant à d'autres essais ou simulations de machines électriques tournantes à compensation de réaction magnétique d'induit comportant un rotor 2 de structure similaire à celle décrite, ne sortiraient pas du cadre de la présente invention dans la mesure où ils résultent des revendications ci-après.

## Revendications

1. Machine électrique tournante avec compensation de réaction magnétique d'induit, ladite machine électrique tournante étant du type de celles comprenant un stator (11) muni de bobinages statoriques (15), un entrefer (14), et un rotor (2) comprenant une pluralité de pôles Nord et pôles Sud alternés et formés à partir d'une pluralité de bobines d'excitation (3) logées dans une pluralité de premiers évidements (4) répartis régulièrement autour d'un arbre (5) dudit rotor (2) et agencés radialement dans une partie intermédiaire dudit rotor entre une partie centrale et une partie circonférentielle dudit rotor (2), se prolongeant axialement dans une masse magnétique (1) dudit rotor (2), de manière à définir un nombre prédéterminé Np de sections polaires (6) circonférentielles, chacune desdites bobines d'excitation (3) étant insérée autour d'un noyau formant cloison entre deux desdits premiers évidements (4) consécutifs, ledit noyau étant sensiblement aligné sur un axe radial central (d) de ladite section polaire correspondante, ledit rotor (2) comprenant en outre une pluralité de premiers aimants permanents (7) présentant une direction d'aimantation sensiblement tangentielle agencés dans des deuxièmes évidements (8) s'étendant sensiblement dans des plans de symétrie radiaux desdites sections polaires (6) de manière à compenser ladite réaction magnétique d'induit, **caractérisée en ce que** ledit rotor (2) comprend une pluralité de seconds aimants permanents (9) agencés dans des troisièmes évidements (10) répartis régulièrement autour dudit arbre (5) dans ladite partie circonférentielle entre lesdites sections polaires (6) et se prolongeant axialement dans ladite masse magnétique (1) de manière à contribuer à la formation desdits pôles Nord et pôles Sud, lesdits premiers aimants permanents (7) présentent chacun une section droite sensiblement rectangulaire, une hauteur (H) dans une direction radiale et une épaisseur (E) dans une direction tangentielle, un côté central à une première distance (a) dudit arbre (5), un côté périphérique à une seconde distance (e) dudit entrefer, un décalage (c) d'un plan médian (AA') par rapport audit plan de symétrie radial de ladite section polaire (6) correspondante, **en ce que** lesdites hauteur (H) et épaisseur (E), lesdites première et seconde distances (a, e), et ledit décalage (c) sont prédéterminés de manière à compenser ladite réaction magnétique d'induit, et **en ce que** ladite hauteur (H) est comprise entre 13 mm et 27 mm et ladite épaisseur (E) est comprise entre 0,5 mm et 2,5 mm, ladite seconde distance (e) étant nulle et ledit décalage (c) étant nul.

2. Machine électrique tournante avec compensation de réaction magnétique d'induit selon la revendication 1, **caractérisée en ce que** lesdits premiers aimants permanents (7) présentent chacun un sens d'aimantation prédéterminé de manière à compenser ladite réaction magnétique d'induit en fonction d'un sens de rotation prédéterminé d'un mode de fonctionnement en moteur ou en génératrice préférentiel.

3. Machine électrique tournante avec compensation de réaction magnétique d'induit selon la revendication 1 ou 2, **caractérisée en ce que** ladite hauteur (H) est sensiblement égale à 13 mm ou 17 mm et ladite épaisseur (E) est sensiblement égale à 1,2 mm ou 1,5 mm si lesdits premiers aimants (7) sont respectivement constitués d'alliage aux terres rares ou de ferrite, ladite seconde distance (e) étant nulle et ledit décalage (c) étant nul.

4. Machine électrique tournante avec compensation de réaction magnétique d'induit selon la revendication 1 ou 2, **caractérisée en ce que** ladite première distance (a) est supérieure à zéro.

5. Machine électrique tournante avec compensation de réaction magnétique d'induit selon la revendication 1 ou 2, **caractérisée en ce que** ledit décalage (c) est supérieur à zéro, de préférence sensiblement égal à la moitié de ladite épaisseur (E).

6. Machine électrique tournante avec compensation de réaction magnétique d'induit selon l'une quelconque des revendications 1 à 5 précédentes, **caractérisée en ce que** ledit rotor (2) présente un diamètre (2r) compris entre 90 mm et 110 mm.

## Patentansprüche

1. Drehende elektrische Maschine mit Kompensation magnetischer Ankerrückwirkung, wobei die drehende elektrische Maschine von der Art derjenigen ist, die einen mit Statorwicklungen (15) versehenen Stator (11), einen Luftspalt (14) und einen Rotor (2) enthält, der eine Vielzahl von Nordpolen und Südpolen enthält, die sich abwechseln und ausgehend von einer Vielzahl von Erregerspulen (3) gebildet werden, die in einer Vielzahl erster Aussparungen (4) untergebracht sind, die gleichmäßig um eine Welle (5) des Rotors (2) verteilt und radial in einem Zwischenbereich des Rotors zwischen einem zentralen Bereich und einem Umfangsbereich des Rotors (2) angeordnet sind, sich axial in einer Magnetmasse (1) des Rotors (2) verlängern, um eine vorbestimmte Anzahl Np von Umfangspolsektionen (6) zu bilden, wobei jede der Erregerspulen (3) um einen Kern herum eingefügt ist, der eine Trennwand zwischen zwei der aufeinanderfolgenden ersten Aussparungen (4) bildet, wobei der Kern im Wesentlichen auf eine zentrale radiale Achse (d) der entsprechenden Polsektion ausgerichtet ist,
wobei der Rotor (2) außerdem eine Vielzahl von ersten Dauermagneten (7) mit einer im Wesentlichen tangentialen Magnetisierungsrichtung enthält, die in zweiten Aussparungen (8) angeordnet sind, die sich im Wesentlichen in radialen Symmetrieebenen der Polsektionen (6) erstrecken, um die magnetische Ankerrückwirkung zu kompensieren, **dadurch gekennzeichnet, dass** der Rotor (2) eine Vielzahl zweiter Dauermagneten (9) enthält, die in dritten Aussparungen (10) angeordnet sind, die gleichmäßig um die Welle (5) im Umfangsbereich zwischen den Polsektionen (6) angeordnet sind und sich axial in der Magnetmasse (1) verlängern, um zur Bildung der Nordpole und Südpole beizutragen, wobei die ersten Dauermagnete (7) je einen im Wesentlichen rechtwinkligen Querschnitt, eine Höhe (H) in einer radialen Richtung und eine Dicke (E) in einer tangentialen Richtung, eine zentrale Seite in einem ersten Abstand (a) zur Welle (5), eine Umfangsseite in einem zweiten Abstand (e) zum Luftspalt, eine Verschiebung (c) einer Mittelebene (AA') bezüglich der radialen Symmetrieebene der entsprechenden Polsektion (6) aufweisen, dass die Höhe (H) und Dicke (E), die ersten und zweiten Abstände (a, e) und die Verschiebung (c) vorbestimmt sind, um die magnetische Ankerrückwirkung zu kompensieren, und dass die Höhe (H) zwischen 13 mm und 27 mm und die Dicke (E) zwischen 0,5 mm und 2,5 mm liegt, wobei der zweite Abstand (e) Null und die Verschiebung (c) Null ist.

2. Drehende elektrische Maschine mit Kompensation magnetischer Ankerrückwirkung nach Anspruch 1, **dadurch gekennzeichnet, dass** die ersten Dauermagnete (7) je eine vorbestimmte Magnetisierungsrichtung aufweisen, um die magnetische Ankerrückwirkung abhängig von einer vorbestimmten Drehrichtung einer bevorzugten Betriebsart als Motor oder Generator zu kompensieren.

3. Drehende elektrische Maschine mit Kompensation magnetischer Ankerrückwirkung nach Anspruch 1 oder 2, **dadurch gekennzeichnet, dass** die Höhe (H) im Wesentlichen gleich 13 mm oder 17 mm und die Dicke (E) im Wesentlichen gleich 1,2 mm oder 1,5 mm ist, wenn die ersten Magnete (7) je aus einer Legierung mit seltenen Erden oder Ferrit bestehen, wobei der zweite Abstand (e) Null und die Verschiebung (c) Null ist.

4. Drehende elektrische Maschine mit Kompensation magnetischer Ankerrückwirkung nach Anspruch 1 oder 2, **dadurch gekennzeichnet, dass** der erste Abstand (a) größer ist als Null.

5. Drehende elektrische Maschine mit Kompensation magnetischer Ankerrückwirkung nach Anspruch 1 oder 2, **dadurch gekennzeichnet, dass** die Verschiebung (c) größer als Null ist, vorzugsweise im Wesentlichen gleich der Hälfte der Dicke (E).

6. Drehende elektrische Maschine mit Kompensation magnetischer Ankerrückwirkung nach einem der vorhergehenden Ansprüche 1 bis 5, **dadurch gekennzeichnet, dass** der Rotor (2) einen Durchmesser (2r) zwischen 90 mm und 110 mm aufweist.

## Claims

1. Rotating electric machine with compensation of armature inductive feedback, said rotating electric machine being of the type of those comprising a stator (11) provided with stator windings (15), an air gap (14), and a rotor (2) comprising a plurality of North poles and South poles alternated and formed from a plurality of excitation windings (3) housed in a plurality of first recesses (4) distributed regularly around a shaft (5) of said rotor (2) and arranged radially in an intermediate part of said rotor between a central part and a circumferential part of said rotor (2), being extended axially in a magnetic mass (1) of said rotor (2), so as to define a predetermined number Np of circumferential pole sections (6), each of said excitation windings (3) being inserted around a core forming a partition between two of said consecutive first recesses (4), said core being substantially aligned on a central radial axis (d) of said corresponding pole section, said rotor (2) further comprising a plurality of first permanent magnets (7) exhibiting a first substantially tangential magnetization direction arranged in second recesses (8) extending substantially in radial planes of symmetry of said pole sections (6) so as to compensate said armature inductive feedback, **characterized in that** said rotor (2) comprises a plurality of second permanent magnets (9) arranged in third recesses (10) distributed regularly around said shaft (5) in said circumferential part between said pole sections (6) and being extended axially in said magnetic mass (1) so as to contribute to the formation of said North poles and South poles, said first permanent magnets (7) each having a substantially rectangular cross section, a height (H) in a radial direction and a thickness (E) in a tangential direction, a central side at a first distance (a) from said shaft (5), a peripheral side at a second distance (e) from said air gap, an offset (c) of a median plane (AA') relative to said radial plane of symmetry of said corresponding pole section (6), **in that** said height (H) and thickness (E), said first and second distances (a, e), and said offset (c) are predetermined so as to compensate said armature inductive feedback, and **in that** said height (H) is between 13 mm and 27 mm and said thickness (E) is between 0.5 mm and 2.5 mm, said second distance (e) being nil and said offset (c) being nil.

2. Rotating electric machine with compensation of armature inductive feedback according to Claim 1, **characterized in that** said first permanent magnets (7) each exhibit a predetermined magnetization direction so as to compensate said armature inductive feedback according to a predetermined direction of rotation of a preferential motor or generator mode of operation.

3. Rotating electric machine with compensation of armature inductive feedback according to Claim 1 or 2, **characterized in that** said height (H) is substantially equal to 13 mm or 17 mm and said thickness (E) is substantially equal to 1.2 mm or 1.5 mm if said first magnets (7) are respectively formed from an alloy of rare earths or of ferrite, said second distance (e) being nil and said offset (c) being nil.

4. Rotating electric machine with compensation of armature inductive feedback according to Claim 1 or 2, **characterized in that** said first distance (a) is greater than zero.

5. Rotating electric machine with compensation of armature inductive feedback according to Claim 1 or 2, **characterized in that** said offset (c) is greater than zero, preferably substantially equal to half said thickness (E).

6. Rotating electric machine with compensation of armature inductive feedback according to any one of the preceding Claims 1 to 5, **characterized in that** said rotor (2) has a diameter (2r) of between 90 mm and 110 mm.
